# EUROPÄISCHE PATENTSCHRIFT

(11) **EP 2 977 964 B1**
(45) Veröffentlichungstag und Bekanntmachung des Hinweises auf die Patenterteilung: **19.09.2018**
(21) Anmeldenummer: 14178592.3
(22) Anmeldetag: 25.07.2014
(51) Int. Cl.: G07C 9/00

(54) **Verfahren zur nutzerbezogene Berechtigungen erfordernden Steuerung eines Gerätes über ein mobiles Endgerät**
Method for controlling a device via a mobile terminal requiring user rights
Procédé de commande d'un appareil nécessitant des autorisations d'utilisateur par l'intermédiaire d'un terminal mobile

(43) Veröffentlichungstag der Anmeldung: 27.01.2016
(73) Patentinhaber: SKIDATA AG, 5083 Grödig/Salzburg (AT)
(72) Erfinder: Wenninger, Christian, 5083 Grödig/Salzburg (AT); Duchac, Bernd, 5083 Grödig/Salzburg (AT)
(74) Vertreter: Karakatsanis, Georgios

(56) Entgegenhaltungen:
- EP-A1- 2 672 464
- WO-A1-2011/065892
- WO-A1-2012/151290
- WO-A1-2013/181682
- US-A1- 2011 311 052
- US-A1- 2014 049 364
- David D. Luxton ET AL: "mHealth Data Security: The Need for HIPAA-Compliant Standardization", Telemedicine and e-Health, vol. 18, no. 4, 1 May 2012 (2012-05-01), pages 284-288, XP055386742, ISSN: 1530-5627, DOI: 10.1089/tmj.2011.0180
- Shifali Arora ET AL: "Privacy and Security in Mobile Health (mHealth) Research", Alcohol Research : Current Reviews, 1 January 2014 (2014-01-01), pages 143-151, XP55386740, Retrieved from the Internet: URL:https://www.ncbi.nlm.nih.gov/pmc/artic les/PMC4432854/pdf/arcr-36-1-143.pdf [retrieved on 2017-06-30]

## Beschreibung

Die vorliegende Erfindung bezieht sich auf ein Verfahren zur nutzerbezogene Berechtigungen erfordernden Steuerung eines Gerätes über ein mobiles Endgerät gemäß dem Oberbegriff des Patentanspruches 1.

Aus dem Stand der Technik sind Geräte, beispielsweise Schließmechanismen bekannt, welche über ein mobiles Endgerät eines Nutzers steuerbar sind. Hierbei wird zum Steuern des Gerätes vom mobilen Endgerät eine lokale Datenverbindung zum Gerät aufgebaut, wobei die Berechtigung zur Steuerung des Gerätes anhand einer Interaktion zwischen dem mobilen Endgerät und einem Server in der Regel über das Internet erworben wird.

Beispielsweise beschreibt die WO2013/181682A1 ein Verfahren zur Steuerung eines Schließmechanismus durch einen Benutzer mit einem mobilen Endgerät, wobei zum Steuern des Schließmechanismus vom mobilen Endgerät eine lokale Datenverbindung zum Schließmechanismus aufgebaut wird und zum Ausstellen eines Schlüssels zum Öffnen des Schließmechanismus mit dem mobilen Endgerät eine Internetverbindung zu einem Identitätsanbieter hergestellt wird.

Bei dem bekannten Verfahren authentifiziert sich der Benutzer über das mobile Endgerät an den Identitätsanbieter, wobei vom Identitätsanbieter eine Authentifizierungsinformation an das mobile Endgerät gesendet wird, welche vom mobilen Endgerät an eine Autorisierungsinstanz in einem Netzwerk gesendet wird. Nach einer Überprüfung der Authentifizierungsinformation von der Autorisierungsinstanz wird ein Schlüssel ausgestellt, mit dem der Schließmechanismus geöffnet wird. Zum Erhalt des Schlüssels zum Öffnen des Schließmechanismus wird eine Verbindung zu einem vorhandenen Identitätsanbieter hergestellt. Der Schlüssel wird anschließend über eine lokale Datenverbindung zwischen dem mobilen Endgerät und dem Schließmechanismus vom mobilen Endgerät an den Schließmechanismus übertragen.

Bei diesem bekannten Verfahren sowie bei sämtlichen aus dem Stand der Technik bekannten Verfahren zur nutzerbezogene Berechtigungen erfordernden Steuerung eines Gerätes über ein mobiles Endgerät wird die erforderliche Berechtigung zur Steuerung des Gerätes bzw. werden die an die erforderlichen Berechtigungen gekoppelten Steuerbefehle im mobilen Endgerät gespeichert und an das zu steuernde Gerät übertragen. Dies kann sich jedoch als nachteilig erweisen, da zum einen die Berechtigungen bzw. die an die Berechtigungen gekoppelten Befehle zur Steuerung des Gerätes an ein mobiles Gerät gekoppelt sind und zum anderen die lokale Speicherung der Berechtigungen bzw. der an Berechtigungen gekoppelten Steuerbefehle in einem mobilen Gerät ein Sicherheitsrisiko darstellt, für den Fall, dass das mobile Endgerät von nicht berechtigten Personen zum Zweck der Steuerung des Gerätes eingesetzt wird.

Die Kopplung der Berechtigung zur Steuerung des Gerätes bzw. der an diese Berechtigung gekoppelten Befehle zur Steuerung eines Gerätes an ein mobiles Endgerät stellt auch eine Komforteinbuße dar: Durch diese Konzeption ist es beispielsweise nicht möglich, ein Fahrrad in einem Fahrraddepot abzustellen und vorzusehen, dass das Fahrrad von einer anderen Person mit einem anderen mobilen Endgerät nach Öffnen des entsprechenden Schließmechanismus benutzt werden kann.

Aus der US 2011/0311052 geht ein Verfahren zur Erhöhung der Sicherheit in einem drahtlos-System zur Kontrolle des Zugriffs auf ein zu steuerndes Gerät mittels eines mobilen elektronischen Gerätes, im Rahmen dessen verschlüsselte Steuerbefehle für das zu steuernde Gerät von einem Authentifizierungsserver über das mobile elektronische Gerät an das zu steuernde Gerät übertragen werden, wobei wenn eine vorgegebene Zeitspanne abgelaufen ist, die Steuerbefehle unbrauchbar werden. Die vom zu steuernden Gerät empfangenen Steuerbefehle werden hinsichtlich der Berechtigung des Nutzers, die Steuerbefehle zu nutzen, nicht überprüft.

Der vorliegenden Erfindung liegt daher die Aufgabe zugrunde, ein Verfahren zur nutzerbezogene Berechtigungen erfordernden Steuerung eines Gerätes über ein mobiles Endgerät anzugeben, durch dessen Durchführung die aus dem Stand der Technik bekannten erwähnten Nachteile vermieden werden. Ferner soll das Verfahren auch für den Fall durchführbar sein, dass nicht nur ein Steuerbefehl sondern mehrere Steuerbefehle möglich sind.

Diese Aufgabe wird durch die Merkmale des Patentanspruches 1 gelöst. Weitere vorteilhafte Ausgestaltungen gehen aus den Unteransprüchen hervor.

Demnach wird ein Verfahren zur nutzerbezogene Berechtigungen erfordernden Steuerung eines Gerätes über ein mobiles Endgerät mittels einer lokalen Datenverbindung zwischen dem mobilen Endgerät und dem zu steuernden Gerät vorgeschlagen, wobei die nutzerbezogene Berechtigungen erfordernden Steuerbefehle für das zu steuernde Gerät anhand einer vorzugsweise internetbasierten Interaktion zwischen dem mobilen Endgerät und einem Authentifizierungs- und/oder Geräte-Management-Server generiert werden und von dem Authentifizierungs- und/oder Geräte-Management-Server über das mobile Endgerät an das zu steuernde Gerät übertragen werden, wobei die nutzerbezogene Berechtigungen erfordernden Steuerbefehle für das zu steuernde Gerät nicht im mobilen Endgerät gespeichert werden.

Die Steuerbefehle für das zu steuernde Gerät werden vom mobilen Endgerät empfangen und anschließend an das Gerät zur Steuerung desselben weitergeleitet. Nach erfolgter Weiterleitung an das Gerät werden diese, sofern sie noch im Arbeitsspeicher des Gerätes vorhanden sind, gelöscht.

Im Rahmen der Erfindung ist vorgesehen, dass die vom mobilen Endgerät an das zu steuernde Gerät übertragenen Steuerbefehle vom zu steuernden Gerät hinsichtlich der Berechtigung des Nutzers, die Steuerbefehle zu nutzen, nicht überprüft werden. Dadurch wird das Verfahren schnell durchgeführt und es wird sparsam mit Rechenressourcen umgegangen. Nach Erhalt eines Steuerbefehls und ggf. nach einer Entschlüsselung oder Überprüfung einer Signatur desselben für den Fall dass der Steuerbefehl verschlüsselt oder signiert ist, wird dieser vom zu steuernden Gerät ausgeführt.

Gemäß der Erfindung wird die lokale Datenverbindung zwischen dem mobilen Endgerät und dem zu steuernden Gerät über einen Bluetooth-Low-Energy (BLE) Standard aufgebaut. Dies resultiert zum einen in dem Vorteil eines geringen Stromverbrauchs über eine herkömmliche Batterie und zum anderen in der Nutzung der "Broadcasting" Eigenschaft dieses Standards, wodurch das zu steuernde Gerät dem mobilen Endgerät anzeigt, dass es von diesem steuerbar ist. Das Broadcasting-Signal enthält in vorteilhafter Weise eine Geräte-ID (Hardware ID)des zu steuernden Gerätes mittels der das Gerät eindeutig identifizierbar ist. Alternativ können zur Herstellung einer lokalen Datenverbindung zwischen dem mobilen Endgerät und dem zu steuernden Gerät weitere aus dem Stand der Technik bekannte Standards zur drahtlosen oder drahtgebundenen Datenkommunikation verwendet werden, wobei, wenn kein Broadcasting Signal zur Verfügung steht, die Geräte-ID des zu steuernden Gerätes aktiv vom mobilen Endgerät abgefragt wird.

Bei dem zu steuernden Gerät kann es sich beispielsweise um eine Schließvorrichtung für eine Tür, ein Fahrraddepot, ein Schließfach, einen Schrank, ein Skischloss oder einen Spind handeln oder auch um eine Zugangskontrollvorrichtung für Personen, beispielsweise für Stadien etc. Ferner kann es sich um Automaten zur Ausgabe von vorgegebenen Gütern handeln.

Die Erfindung wird im Folgenden anhand der beigefügten Figuren beispielhaft näher erläutert. Es zeigen:
Figur 1 ein Blockdiagramm zur Veranschaulichung erforderlicher Komponenten zur Durchführung einer Variante des erfindungsgemäßen Verfahrens;
Figur 2 ein Sequenzdiagramm zur Veranschaulichung der Verfahrensschritte zum Steuern eines Gerätes, bei dem ein Steuerbefehl generierbar ist, am Beispiel des Öffnens eines als Schließmechanismus ausgeführten Gerätes für ein Blockdiagramm gemäß Figur 1; und
Figur 3 ein Sequenzdiagramm zur Veranschaulichung der Verfahrensschritte zum Steuern eines Gerätes, bei dem mehrere Steuerbefehle generierbar sind für ein Blockdiagramm gemäß Figur 1.

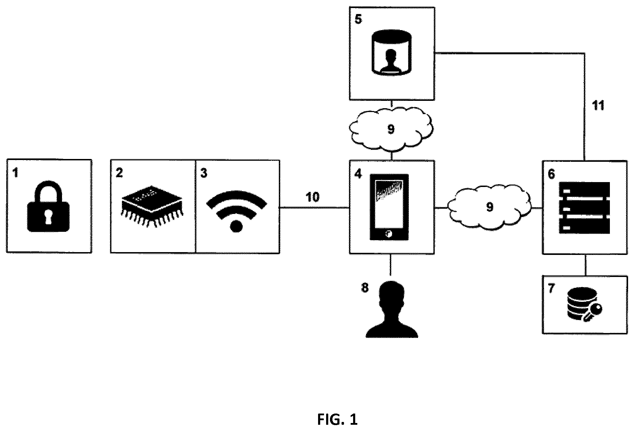

In Figur 1 ist mit 1 das zu steuernde Gerät bezeichnet, wobei mit 2 ein Mikrocontroller zur Verarbeitung der Steuerbefehle und mit 3 ein BLE-Modul bezeichnet ist. Der Mikrocontroller 2 und das BLE-Modul 3 werden von einer herkömmlichen Standardbatterie mit Energie gespeist. Ferner kann ein Näherungssensor vorgesehen sein, wobei wenn der Näherungssensor bedämpft wird, der Mikrocontroller 2 und das BLE-Modul 3 von einem Ruhemodus in einen Aktivmodus übergehen.

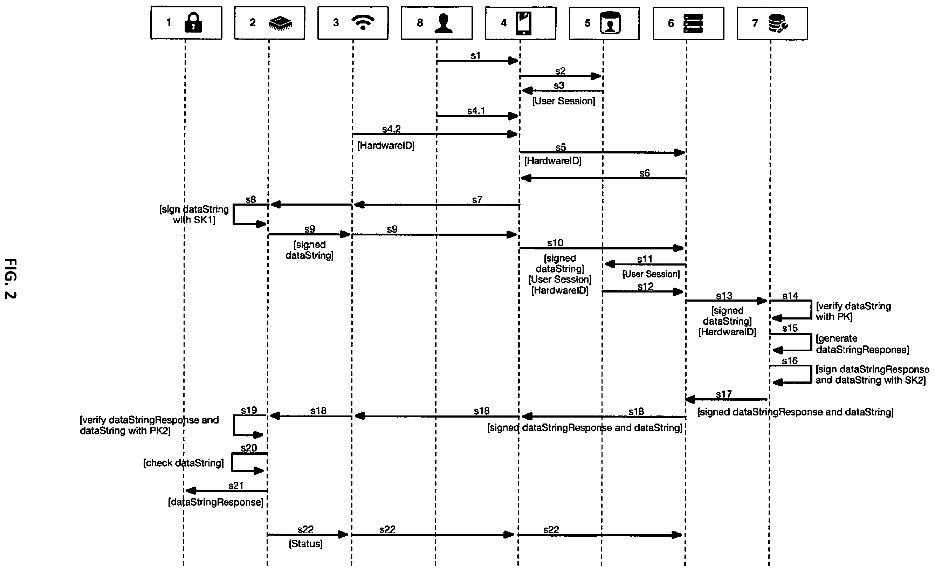

In Figuren 1 und 2 ist mit 8 ein Nutzer bezeichnet, welcher ein mobiles Endgerät 4 bedient, das als Smartphone, Tablet, etc. ausgeführt sein kann, wobei zwischen dem mobilen Endgerät 4 und dem Mikrocontroller 2 zur Steuerung des zu steuernden Gerätes 1 über das mobile Endgerät 4 und das BLE-Modul 3 ein BLE-Kommunikationspfad 10 herstellbar ist.

Das mobile Endgerät 4 kann über eine Internetverbindung 9 mit einem Authentifizierungsserver 5 kommunizieren, in dem Nutzerdaten angelegt sind und Software zur Nutzerauthentifizierung implementiert ist. Im Authentifizierungsserver 5 werden keine Nutzerberechtigungen gespeichert. Ferner kann das mobile Endgerät 4 über eine Internetverbindung 9 mit einem Geräte-Management-Server 6 kommunizieren, in dem Informationen bezüglich der zu steuernden Geräte gespeichert sind und Zuordnungen zwischen einem oder mehreren Nutzern und einem zu steuernden Gerät abgelegt sind.

Mit 7 ist ein Verschlüsselungsmodul bezeichnet, welches Steuerbefehle empfängt, verifiziert und signiert. Das Verschlüsselungsmodul kann in den Geräte-Management-Server 6 integriert sein. Der Authentifizierungsserver 5 und der Geräte-Management-Server 6 können in einem Server zusammengefasst sein. Ferner können der Authentifizierungsserver 5 und der Geräte-Management-Server 6 über eine Netzwerkverbindung, welche als LAN-Verbindung 11 ausgeführt sein kann, zum Zweck der Datenkommunikation miteinander verbunden sein. In Abhängigkeit von den Transaktionsdaten zwischen dem Nutzer 8 und dem Geräte-Management-Server 6 ist ein B2C (Business to Consumer) oder ein B2B (Business to Business) Abrechnungsmodel nach dem Stand der Technik vorgesehen.

Bezugnehmend auf Figur 2 startet der Nutzer 8 eine entsprechende Software auf seinem mobilen Gerät 4, die als sogenannte App implementiert sein kann (Schritt s1), wobei im nächsten Schritt s2 mittels einer Verbindung zwischen dem mobilen Endgerät 4 und dem Authentifizierungsserver 5 eine Registrierung oder eine Anmeldung des Nutzers 8 durchgeführt wird, wobei nach Durchführung der Anmeldung oder der Registrierung eine User-Session-ID vom Authentifizierungsserver 5 an das mobile Endgerät 4 gesendet wird (Schritt s3).

In einem nächsten Schritt s4.1 wählt der Nutzer 8 über das mobile Endgerät 4 ein zu steuerndes Gerät 1 aus, wobei im Rahmen einer BLE-Interaktion zwischen dem mobilen Endgerät 4 und dem BLE-Modul 3 des zu steuernden Gerätes 1 ein sogenanntes Broadcasting-Signal enthaltend die Hardware-ID des zu steuernden Gerätes 1 vom BLE-Modul 3 an das mobile Endgerät 4 gesendet wird (Schritt s4.2).

In einem nächsten Schritt s5 wird eine Verbindung zwischen dem mobilen Endgerät 4 und dem Geräte-Management-Server 6 hergestellt, wobei der Status des zu steuernden Gerätes 1, welches anhand der Hardware-ID identifizierbar ist, abgefragt wird. Im Rahmen eines nächsten Verfahrensschrittes s6 wird für den Fall, dass das zu steuernde Gerät 1 gesteuert werden kann, vom Geräte-Management-Server 6 an das mobile Endgerät 4 ein Signal geschickt, welches die Steuerbarkeit des zu steuernden Gerätes 1 über das mobile Endgerät 4 anzeigt. Da bei dem als Schließmechanismus ausgeführten Gerät 1 zwei Steuerbefehle nämlich "Open" und "Lock" möglich sind und dem Geräte-Management-Server 6 der Status des Gerätes 1 bekannt ist, kann zu jedem Zeitpunkt nur ein Befehl ausgeführt werden, im vorliegenden Fall der Befehl "Open" zum Öffnen des Schließmechanismus.

Anschließend wird eine BLE-Datenverbindung zwischen dem mobilen Endgerät 4 und dem zu steuernden Gerät 1 über das BLE-Modul 3 und den Mikrocontroller 2 hergestellt (Schritt s7), wobei in einem nächsten Schritt s8 der Mikrocontroller 2 bei geschlossenem Schließmechanismus ein Datenpaket (DataString) mit einem öffentlichen Schlüssel SK1 des Geräte-Management-Servers 6 signiert und in einem nächsten Schritt s9 diese an das mobile Endgerät 4 sendet.

Das signierte Datenpaket (DataString) wird zusammen mit der User-Session-ID und der Hardware-ID des zu steuernden Gerätes 1 an den Geräte-Management-Server 6 geschickt, wobei der eine zur Verfügung stehende Steuerbefehl, im vorliegenden Fall ein Open-Befehl für den Schließmechanismus 1 beantragt wird (s10).

In einem nächsten Schritt s11 wird vom Geräte-Management-Server 6 anhand einer Interaktion mit dem Authentifizierungs-Server 5 die im Schritt s10 empfangene User-Session-ID verifiziert und es wird bei einer gültigen User-Session-ID (s12) von dem Verschlüsselungsmodul 7 ein Antwort-Datenpaket (DataStringResponse) als Reaktion auf das enthaltene Datenpaket (DataString) beantragt (Schritt s13). Das Verschlüsselungsmodul 7 überprüft das vom Mikrokontroller 2 signierte Datenpaket (DataString) anhand eines privaten Schlüssels PK des Geräte-Management-Servers 6 (Schritt s14) und generiert ein Antwort-Datenpaket (DataStringResponse) (Schritt s15), welches den Steuerbefehl enthält, welches zusammen mit dem enthaltenen Datenpaket (DataString) vom Verschlüsselungsmodul 7 mit einem öffentlichen Schlüssel SK2 des Mikrocontrollers 2 signiert wird (Schritt s16). Für den Fall, dass nur ein Steuerbefehl möglich ist, kann das Antwort-Datenpaket leer sein.

In einem nächsten Schritt s17 wird das signierte Antwort-Datenpaket (DataStringResponse) zusammen mit dem signierten enthaltenen Datenpaket (DataString) an den Geräte-Management-Server 6 weitergeleitet, wobei anschließend im Schritt s18 das signierte Antwort-Datenpaket (DataStringResponse) zusammen mit dem signierten enthaltenen Datenpaket (DataString) über das Internet, das mobile Endgerät 4 und die BLE-Datenverbindung zwischen dem mobilen Endgerät 4 und dem Mikrocontroller 2 ohne Speicherung im mobilen Endgerät 4 an den Mikrocontroller 2 geleitet wird.

Das enthaltene Datenpaket (DataString) wird zusammen mit dem Antwort-Datenpaket (DataStringResponse) an den Mikrocontroller 2 zurückgeschickt, damit vom Mikrocontroller 2 überprüft werden kann, dass der enthaltene Steuerbefehl vom Gerät 1 ausgeführt werden soll. Wenn das Datenpaket (DataString) nicht dem ursprünglich generierten und an den Geräte-Management-Server 6 geschickten Datenpaket entspricht, wird der Steuerbefehl nicht ausgeführt, da er nicht dem Gerät 1 zuordenbar ist. Dies ist insbesondere dann von Vorteil, wenn mehrere Geräte vom Geräte-Management-Server 6 verwaltet werden, da dadurch ausgeschlossen werden kann, dass ein Gerät aus Versehen einen Steuerbefehl ausführt, der für ein anderes Gerät bestimmt ist. Das Datenpaket (DataString) kann z.B. eine eineindeutige, zufällig generierte Nummer sein.

In einem nächsten Schritt s19 werden das empfangene signierte Antwort-Datenpaket (DataStringResponse) und das zurückgeschickte Datenpaket (DataString) vom Mikrocontroller 2 anhand eines privaten Schüssels PK2 verifiziert und nach erfolgter Verifizierung erfolgt die dem Antwort-Datenpaket (DataStringResponse) entsprechende Reaktion des Mikrocontrollers 2 (Schritt s20), welcher (Schritt s21) den entsprechenden Befehl an das zu steuernde Gerät 1 sendet. In einem letzten Schritt wird nach erfolgter Ausführung des Steuerbefehls eine Statusinformation über die BLE-Datenverbindung, das mobile Endgerät 4 und das Internet 9 an den Geräte-Management-Server 6 geschickt, die für eine erneute Durchführung des Verfahrens benötigt wird.

Das Verfahren wurde anhand lediglich eines möglichen generierbaren Steuerbefehls, im vorliegenden Beispiel anhand eines Unlock-Steuerbefehls zum Öffnen eines als Schließmechanismus ausgeführten Gerätes 1 beschrieben. Für den Fall eines Lock-Steuerbefehls wird entsprechend vorgegangen.

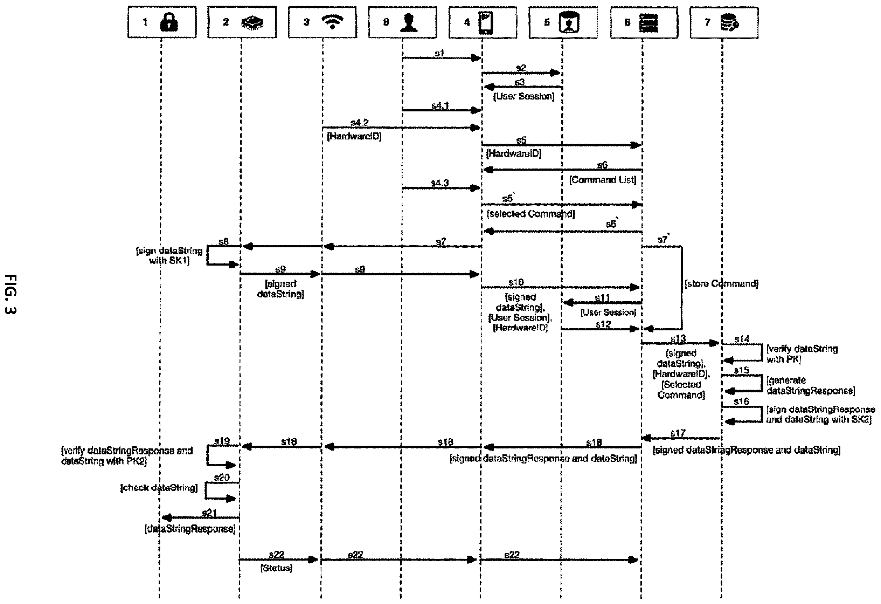

In Abhängigkeit der Funktionalität und des Status eines zu steuernden Gerätes 1 können weitere Steuerbefehle generiert werden, wobei gemäß der Erfindung und bezugnehmend auf Figur 3 für den Fall, dass mehrere Steuerbefehle möglich sind, nach den Schritten s1 bis s5 gemäß Figur 2 der Nutzer 8 im Schritt s6 vom Geräte-Management-Server 6 über das mobile Endgerät 4 ein Signal erhält, welches die Steuerbarkeit des zu steuernden Gerätes 1 über das mobile Endgerät 4 und zusätzlich die möglichen Steuerbefehle (Command List) anzeigt.

Hierbei wählt der Nutzer 8 über das mobile Endgerät 4 aus der Mehrzahl an möglichen Steuerbefehlen den gewünschten zu generierenden Steuerbefehl aus (zusätzlicher Schritt s 4.3), wobei diese Information vom mobilen Endgerät 4 im zusätzlichen Schritt s5' an den Geräte-Management-Server 6 geschickt wird, der im zusätzlichen Schritt s6' die Auswahl bestätigt. Der ausgewählte Steuerbefehl für das Gerät 1 wird im Geräte-Management-Server 6 gespeichert und der Hardware-ID des Gerätes 1 zugeordnet (Schritt s7').

Die weiteren Verfahrensschritte entsprechen den Verfahrensschritten gemäß Figur 2 mit dem Unterschied, dass im Schritt s13 von dem Verschlüsselungsmodul 7 ein Antwort-Datenpaket (DataStringResponse) beantragt wird, welches dem gewünschten ausgewählten Steuerbefehl entspricht bzw. diesen enthält. Ein Gerät 1, bei dem mehrere Steuerbefehle generierbar sind, kann beispielsweise ein Getränkeautomat sein, der mehrere Auswahlmöglichkeiten bietet.

## Patentansprüche

1. Verfahren zur nutzerbezogene Berechtigungen erfordernden Steuerung eines Gerätes (1) über ein mobiles Endgerät (4) mittels einer lokalen Datenverbindung über einen Bluetooth-Low-Energy (BLE) Standard zwischen dem mobilen Endgerät (4) und dem zu steuernden Gerät (1), wobei die nutzerbezogene Berechtigungen erfordernden Steuerbefehle für das zu steuernde Gerät (1) anhand einer Interaktion zwischen dem mobilen Endgerät (4) und einem Authentifizierungsserver (5) und/oder einem Geräte-Management-Server (6) generiert werden und von dem Authentifizierungs- und/oder Geräte-Management-Server (5, 6) über das mobile Endgerät (4) an das zu steuernde Gerät (1) übertragen werden, wobei die vom zu steuernden Gerät (1) empfangenen Steuerbefehle hinsichtlich der Berechtigung des Nutzers (8), die Steuerbefehle zu nutzen, nicht überprüft werden, **dadurch gekennzeichnet, dass** die nutzerbezogene Berechtigungen erfordernden Steuerbefehle für das zu steuernde Gerät (1) vom mobilen Endgerät (4) empfangen und anschließend an das zu steuernde Gerät (1) zur Steuerung desselben weitergeleitet und nicht im mobilen Endgerät (4) gespeichert werden, wobei, wenn nur ein möglicher Steuerbefehl generierbar ist, das Verfahren folgende Schritte umfasst:
- Starten (s1) seitens des Nutzers (8) einer Software auf dem mobilen Endgerät (4)
- Durchführung (s2) einer Registrierung oder einer Anmeldung des Nutzers (8) mittels einer Verbindung zwischen dem mobilen Endgerät (4) und dem Authentifizierungsserver (5), wobei nach Durchführung (s3) der Anmeldung oder der Registrierung eine User-Session-ID vom Authentifizierungsserver (5) an das mobile Endgerät (4) gesendet wird;
- Auswählen (s4.1) eines zu steuernden Gerätes (1) durch den Nutzer (8) über das mobile Endgerät (4), wobei im Rahmen einer BLE-Interaktion zwischen dem mobilen Endgerät (4) und einem BLE-Modul (3) des zu steuernden Gerätes (1) ein Broadcasting-Signal enthaltend die Hardware-ID des zu steuernden Gerätes (1) vom BLE-Modul (3) an das mobile Endgerät (4) gesendet wird (s4.2);
- Herstellen (s5) einer Verbindung zwischen dem mobilen Endgerät (4) und dem Geräte-Management-Server (6), wobei der Status des zu steuernden Gerätes (1), welches anhand der Hardware-ID identifizierbar ist, abgefragt wird und Senden (s6) eines Signals, welches die Steuerbarkeit des zu steuernden Gerätes (1) über das mobile Endgerät (4) anzeigt, vom Geräte-Management-Server (6) an das mobile Endgerät (4);
- Herstellen (s7) einer BLE-Datenverbindung zwischen dem mobilen Endgerät (4) und dem zu steuernden Gerät (1) über das BLE-Modul (3) und einen Mikrocontroller (2) des zu steuernden Gerätes (1), wobei in einem nächsten Schritt (s8) der Mikrocontroller (2) ein Datenpaket (DataString) mit einem öffentlichen Schlüssel des Geräte-Management-Servers (6) signiert und dieses an das mobile Endgerät (4) sendet (s9);
- Senden (s10) des signierten Datenpaketes (DataString) zusammen mit der User-Session-ID und der Hardware-ID des zu steuernden Gerätes (1) an den Geräte-Management-Server (6), wobei der Steuerbefehl beantragt wird;
- Verifizieren (s11,s12) der User-Session-ID vom Geräte-Management-Server (6) anhand einer Interaktion mit dem Authentifizierungs-Server (5) und bei einer gültigen User-Session-ID beantragen (s13) eines Antwort-Datenpakets (DataStringResponse) von einem Verschlüsselungsmodul (7);
- Überprüfen (s14) vom Verschlüsselungsmodul (7) des vom Mikrokontroller (2) signierten Datenpakets (DataString) anhand eines privaten Schlüssels des Geräte-Management-Servers (6) und Generieren (s15) eines den Steuerbefehl enthaltenden Antwort-Datenpakets (DataStringResponse), welches zusammen mit dem enthaltenen Datenpaket (DataString) vom Verschlüsselungsmodul (7) mit einem öffentlichen Schlüssel des Mikrocontrollers (2) signiert wird (s16);
- Weiterleiten (s17) des signierten Antwort-Datenpakets (DataStringResponse) zusammen mit dem signierten enthaltenen Datenpaket (DataString) an den Geräte-Management-Server (6), wobei anschließend (s18) das signierte Antwort-Datenpaket (DataStringResponse) zusammen mit dem signierten enthaltenen Datenpaket (DataString) über eine Verbindung zwischen dem mobilen Endgerät (4) und dem Geräte-Management-Server (6), das mobile Endgerät (4) und die BLE-Datenverbindung zwischen dem mobilen Endgerät (4) und dem Mikrocontroller (2) ohne Speicherung im mobilen Endgerät (4) an den Mikrocontroller (2) geleitet wird;
- Verifizieren (s19,s20) des empfangenen signierten Antwort-Datenpakets (DataStringResponse) und des zurückgeschickten Datenpaket (DataString) vom Mikrocontroller (2) anhand eines privaten Schüssels und nach erfolgter Verifizierung Senden (s21) des Steuerbefehls zur Ausführung an das zu steuernde Gerät (1); und
- Ausführung des Steuerbefehls und senden (s22) einer Statusinformation über die BLE-Datenverbindung zwischen dem mobilen Endgerät (4) und dem zu steuernden Gerät (1) über das BLE-Modul (3), das mobile Endgerät (4) und eine Verbindung zwischen dem mobilen Endgerät (4) und dem Geräte-Management-Server (6) an den Geräte-Management-Server (6) und wobei, wenn mehrere Steuerbefehle generierbar sind, das Verfahren folgende Schritte umfasst:
- Starten (s1) seitens des Nutzers (8) einer Software auf dem mobilen Endgerät (4);
- Durchführung (s2) einer Registrierung oder einer Anmeldung des Nutzers (8) mittels einer Verbindung zwischen dem mobilen Endgerät (4) und dem Authentifizierungsserver (5), wobei nach Durchführung (s3) der Anmeldung oder der Registrierung eine User-Session-ID vom Authentifizierungsserver (5) an das mobile Endgerät (4) gesendet wird;
- Auswählen (s4.1) eines zu steuernden Gerätes (1) durch den Nutzer (8) über das mobile Endgerät (4), wobei im Rahmen einer BLE-Interaktion zwischen dem mobilen Endgerät (4) und einem BLE-Modul (3) des zu steuernden Gerätes (1) ein Broadcasting-Signal enthaltend die Hardware-ID des zu steuernden Gerätes (1) vom BLE-Modul (3) an das mobile Endgerät (4) gesendet wird (s4.2);
- Herstellen (s5) einer Verbindung zwischen dem mobilen Endgerät (4) und dem Geräte-Management-Server (6), wobei der Status des zu steuernden Gerätes (1), welches anhand der Hardware-ID identifizierbar ist, abgefragt wird und Senden (s6) eines Signals, welches die Steuerbarkeit des zu steuernden Gerätes (1) über das mobile Endgerät (4) und zusätzlich die möglichen Steuerbefehle (Command List) anzeigt, vom Geräte-Management-Server (6) an das mobile Endgerät (4);
- Auswählen (s4.3) seitens des Nutzers (8) des gewünschten zu generierenden Steuerbefehls aus der Mehrzahl an möglichen Steuerbefehlen über das mobile Endgerät (4), wobei diese Information vom mobilen Endgerät (4) im an den Geräte-Management-Server (6) geschickt wird (s5'), der in einem nächsten Schritt die Auswahl bestätigt (s6');
- Speichern (s7') des ausgewählten Steuerbefehls im Geräte-Management-Server (6) und Zuordnen des ausgewählten Steuerbefehls der Hardware-ID des Gerätes 1;
- Herstellen (s7) einer BLE-Datenverbindung zwischen dem mobilen Endgerät (4) und dem zu steuernden Gerät (1) über das BLE-Modul (3) und einen Mikrocontroller (2) des zu steuernden Gerätes (1), wobei in einem nächsten Schritt (s8) der Mikrocontroller (2) ein Datenpaket (DataString) mit einem öffentlichen Schlüssel des Geräte-Management-Servers (6) signiert und dieses an das mobile Endgerät (4) sendet (s9);
- Senden (s10) des signierten Datenpaketes (DataString) zusammen mit der User-Session-ID und der Hardware-ID des zu steuernden Gerätes (1) an den Geräte-Management-Server (6), wobei der Steuerbefehl beantragt wird;
- Verifizieren (s11,s12) der User-Session-ID vom Geräte-Management-Server (6) anhand einer Interaktion mit dem Authentifizierungs-Server (5) und bei einer gültigen User-Session-ID beantragen (s13) eines Antwort-Datenpakets (DataStringResponse) von dem Verschlüsselungsmodul (7), welches Antwort-Datenpaket (DataStringResponse) den gewünschten ausgewählten Steuerbefehl enthält bzw. diesem entspricht;
- Überprüfen (s14) vom Verschlüsselungsmodul (7) des vom Mikrokontroller (2) signierten Datenpakets (DataString) anhand eines privaten Schlüssels des Geräte-Management-Servers (6) und Generieren (s15) eines den Steuerbefehl enthaltenden Antwort-Datenpakets (DataStringResponse), welches zusammen mit dem enthaltenen Datenpaket (DataString) vom Verschlüsselungsmodul (7) mit einem öffentlichen Schlüssel des Mikrocontrollers (2) signiert wird (s16);
- Weiterleiten (s17) des signierten Antwort-Datenpakets (DataStringResponse) zusammen mit dem signierten enthaltenen Datenpaket (DataString) an den Geräte-Management-Server (6), wobei anschließend (s18) das signierte Antwort-Datenpaket (DataStringResponse) zusammen mit dem signierten enthaltenen Datenpaket (DataString) über eine Verbindung zwischen dem mobilen Endgerät (4) und dem Geräte-Management-Server (6), das mobile Endgerät (4) und die BLE-Datenverbindung zwischen dem mobilen Endgerät (4) und dem Mikrocontroller (2) ohne Speicherung im mobilen Endgerät (4) an den Mikrocontroller (2) geleitet wird;
- Verifizieren (s19,s20) des empfangenen signierten Antwort-Datenpakets (DataStringResponse) und des zurückgeschickten Datenpaket (DataString) vom Mikrocontroller (2) anhand eines privaten Schüssels und nach erfolgter Verifizierung Senden (s21) des Steuerbefehls zur Ausführung an das zu steuernde Gerät (1); und
- Ausführung des Steuerbefehls und senden (s22) einer Statusinformation über die BLE-Datenverbindung zwischen dem mobilen Endgerät (4) und dem zu steuernden Gerät (1) über das BLE-Modul (3), das mobile Endgerät (4) und eine Verbindung zwischen dem mobilen Endgerät (4) und dem Geräte-Management-Server (6) an den Geräte-Management-Server (6).

2. Verfahren zur nutzerbezogene Berechtigungen erfordernden Steuerung eines Gerätes (1) über ein mobiles Endgerät (4) mittels einer lokalen Datenverbindung zwischen dem mobilen Endgerät (4) und dem zu steuernden Gerät (1), nach Anspruch 1, **dadurch gekennzeichnet, dass** die Verbindung zwischen dem mobilen Endgerät (4) und dem Geräte-Management-Server (6) eine internetbasierte Verbindung ist.

3. Verfahren zur nutzerbezogene Berechtigungen erfordernden Steuerung eines Gerätes (1) über ein mobiles Endgerät (4) mittels einer lokalen Datenverbindung zwischen dem mobilen Endgerät (4) und dem zu steuernden Gerät (1) nach Anspruch 1 oder 2, **dadurch gekennzeichnet, dass** das zu steuernde Gerät (1) eine Schließvorrichtung für eine Tür, ein Fahrraddepot, ein Schließfach, einen Schrank, ein Skischloss oder einen Spind ist oder eine Zugangskontrollvorrichtung für Personen oder ein Automat zur Ausgabe von vorgegebenen Gütern ist.

4. Verfahren zur nutzerbezogene Berechtigungen erfordernden Steuerung eines Gerätes (1) über ein mobiles Endgerät (4) mittels einer lokalen Datenverbindung zwischen dem mobilen Endgerät (4) und dem zu steuernden Gerät (1) nach Anspruch 1, 2 oder 3, **dadurch gekennzeichnet, dass** anstelle einer über einen Bluetooth-Low-Energy (BLE) Standard aufgebauten lokalen Datenverbindung zwischen dem mobilen Endgerät (4) und dem zu steuernden Gerät (1) ein anderer Standard zur drahtlosen oder drahtgebundenen Datenkommunikation verwendet wird, wobei, wenn kein Broadcasting Signal zur Verfügung steht, die Hardware-ID des zu steuernden Gerätes (1) aktiv vom mobilen Endgerät (4) abgefragt wird.

## Claims

1. Method for controlling a device (1) requiring user rights using a mobile terminal (4) by means of a local data connection via a Bluetooth-Low-energy (BLE) standard between the mobile terminal (4) and the device to be controlled (1), wherein the control commands requiring user rights for the device (1) to be controlled are generated on the basis of an interaction between the mobile terminal (4) and an authentication server (5) and/or a Device Management Server (6) and are transmitted from the authentication and/or Device Management Server (5, 6) via the mobile terminal (4) to the device (1) to be controlled, wherein the control commands received by the device (1) to be controlled are not verified with respect to the rights of the user (8) to use the control commands,
**characterized in that**
the control commands requiring the user rights for the device (1) to be controlled are received by the mobile device (4) and then forwarded to the device (1) to be controlled and are not stored in the mobile terminal (4), wherein, if only one possible control command can be generated, the method comprises the following steps:
- launching (S1) by the user (8) of a piece of software on a mobile terminal (4)
- carrying out (S2) a registration or login of the user (8) by means of a connection between the mobile terminal (4) and the authentication server (5), wherein after carrying out (S3) the registration or login a user session ID is sent from the authentication server (5) to the mobile terminal (4);
- selecting (S4.1) a device (1) to be controlled by the user (8) using the mobile terminal (4), wherein during a BLE-interaction between the mobile terminal (4) and a BLE-module (3) of the device (1) to be controlled, a broadcasting signal containing the hardware ID of the device (1) to be controlled is sent (S4.2)from the BLE module (3) to the mobile terminal (4);
- establishing (S5) a connection between the mobile terminal (4) and the Device Management Server (6), wherein the status of the device (1) to be controlled, which is identifiable based on the hardware ID, is queried and sending (S6) a signal, which indicates the controllability of the device (1) to be controlled using the mobile terminal (4), from the Device Management Server (6) to the mobile terminal (4);
- establishing (S7) a BLE data connection between the mobile terminal (4) and the device (1) to be controlled via the BLE-module (3) and a micro-controller (2) of the device (1) to be controlled, wherein in a next step (S8) the micro-controller (2) signs a data packet (DataString) with a public key of the Device Management Server (6) and sends (S9) this to the mobile terminal (4);
- sending (S10) the signed data packet (DataString) together with the user session ID and the hardware ID of the device (1) to be controlled to the Device Management Server (6), wherein the control command is requested;
- verifying (S11,S12) the user session ID from the Device Management Server (6) on the basis of an interaction with the authentication server (5), and in the case of a valid user session ID requesting (S13) a response data packet (DataStringResponse) from an encryption module (7) ;
- checking (S14) by the encryption module (7) of the data packet (DataString) signed by the micro-controller (2) on the basis of a private key of the Device Management Server (6) and generating (S15) a response data packet (DataStringResponse) containing the control command, which together with the contained data packet (DataString) is signed (S16) by the encryption module (7) with a public key of the micro-controller (2);
- forwarding (S17) of the signed response data packet (DataStringResponse) together with the signed contained data packet (DataString) to the Device Management Server (6), wherein then (S18) the signed response data packet (DataStringResponse) together with the signed contained data packet (DataString) is passed to the micro-controller (2) via a connection between the mobile terminal (4) and the Device Management Server (6), the mobile terminal device (4) and the BLE data connection between the mobile terminal (4) and the microcontroller (2), without storage in the mobile terminal (4);
- verifying (S19,S20) the received signed response data packet (DataStringResponse) and the returned data packet (DataString) from the micro-controller (2) using a private key and after completed verification, sending (S21) the control command to the device (1) to be controlled for execution; and
- executing the control command and sending (S22) a status information item via the BLE data connection between the mobile terminal (4) and the device (1) to be controlled via the BLE module (3), the mobile terminal (4) and a connection between the mobile terminal (4) and the Device Management Server (6), to the Device Management Server (6)
and wherein, if a plurality of control commands can be generated, the method comprises the following steps:
- launching (S1) by the user (8) of a piece of software on the mobile terminal (4)
- carrying out (S2) a registration or login of the user (8) by means of a connection between the mobile terminal (4) and the authentication server (5), wherein after carrying out (S3) the registration or login a user session ID is sent from the authentication server (5) to the mobile terminal (4);
- selecting (S4.1) a device (1) to be controlled by the user (8) using the mobile terminal (4), wherein during a BLE interaction between the mobile terminal (4) and a BLE module (3) of the device (1) to be controlled, a broadcasting signal containing the hardware ID of the device (1) to be controlled is sent (S4.2) from the BLE module (3) to the mobile terminal (4);
- establishing (S5) a connection between the mobile terminal (4) and the Device Management Server (6), wherein the status of the device (1) to be controlled, which is identifiable based on the hardware ID, is queried, and sending (S6) a signal which indicates the controllability of the device (1) to be controlled using the mobile terminal (4) and additionally the possible control commands (Command List), from the Device Management Server (6) to the mobile terminal (4);
- selecting (S4.3) by the user (8) of the desired control command to be generated from the plurality of possible control commands via the mobile terminal (4), wherein this information is sent (S5') by the mobile terminal (4) to the Device Management Server (6), which confirms (S6') the selection in a next step;
- storing (S7') the selected control command in the Device Management Server (6) and assigning the selected control command to the hardware ID of the device 1;
- establishing (S7) a BLE data connection between the mobile terminal (4) and the device (1) to be controlled via the BLE module (3) and a micro-controller (2) of the device (1) to be controlled, wherein in a next step (S8) the micro-controller (2) signs a data packet (DataString) with a public key of the Device Management Server (6) and sends (S9) this to the mobile terminal (4);
- sending (S10) the signed data packet (DataString) together with the user session ID and the hardware ID of the device (1) to be controlled to the Device Management Server (6), wherein the control command is requested;
- verifying (S11,S12) the user session ID by the Device Management Server (6) based on an interaction with the authentication server (5) and in the case of a valid user session ID, requesting (S13) a response data packet (DataStringResponse) by the encryption module (7), which response data packet (DataStringResponse) contains or corresponds to the selected control command;
- checking (S14) by the encryption module (7) of the data packet (DataString) signed by the micro-controller (2) on the basis of a private key of the Device Management Server (6) and generating (S15) a response data packet (DataStringResponse) containing the control command, which together with the contained data packet (DataString) is signed (S16) by the encryption module (7) with a public key of the micro-controller (2);
- forwarding (S17) of the signed response data packet (DataStringResponse) together with the signed contained data packet (DataString) to the Device Management Server (6), wherein then (S18) the signed response data packet (DataStringResponse) together with the signed contained data packet (DataString) is passed to the micro-controller (2) via a connection between the mobile terminal (4) and the Device Management Server (6), the mobile terminal device (4) and the BLE data connection between the mobile terminal (4) and the microcontroller (2), without storage in the mobile terminal (4);
- verifying (S19,S20) the received signed response data packet (DataStringResponse) and the returned data packet (DataString) from the micro-controller (2) using a private key and after completed verification, sending (S21) the control command to the device (1) to be controlled for execution; and
- executing the control command and sending (S22) a status information item via the BLE data connection between the mobile terminal (4) and the device (1) to be controlled via the BLE module (3), the mobile terminal (4) and a connection between the mobile terminal (4) and the Device Management Server (6), to the Device Management Server (6).

2. Method for controlling a device (1) requiring user rights using a mobile terminal (4) by means of a local data connection between the mobile terminal (4) and the device to be controlled (1), according to Claim 1, **characterized in that**
the connection between the mobile terminal (4) and the Device Management Server (6) is an internet-based connection.

3. Method for controlling a device (1) requiring user rights using a mobile terminal (4) by means of a local data connection between the mobile terminal (4) and the device to be controlled (1), according to Claim 1 or 2,
**characterized in that**
the device to be controlled (1) is a locking device for a door, a bicycle depot, a safety deposit box, a cabinet, a ski lock or a locker or an access control device for persons or a vending machine for issuing specified goods.

4. Method for controlling a device (1) requiring user rights using a mobile terminal (4) by means of a local data connection between the mobile terminal (4) and the device to be controlled (1), according to Claim 1, 2 or 3,
**characterized in that**
instead of a local data connection established using a Bluetooth-Low-energy (BLE) standard between the mobile terminal (4) and the device to be controlled (1), another standard for wireless or wire-bound data communication is used, wherein if no broadcasting signal is available, the hardware ID of the device (1) to be controlled is actively queried by the mobile device (4).

## Revendications

1. Procédé, destiné à commander un appareil (1) requérant des autorisations au niveau de l'utilisateur, par l'intermédiaire d'un terminal mobile (4) à l'aide d'une liaison de données locale via un standard Bluetooth-Low-Energy (BLE) entre le terminal mobile (4) et l'appareil (1) à commander, les instructions de commande pour l'appareil (1) à commander requérant des autorisations au niveau de l'utilisateur étant générées à l'aide d'une interaction entre le terminal mobile (4) et un serveur d'authentification (5) et/ou un serveur de gestion d'appareil (6) et étant transmises par le serveur d'authentification et/ou le serveur de gestion d'appareil (5, 6) par l'intermédiaire du terminal mobile (4) à l'appareil (1) à commander, les instructions de commande réceptionnées par l'appareil (1) à commander n'étant pas vérifiées au niveau de l'autorisation de l'utilisateur (8) à utiliser les instructions de commande, **caractérisé en ce que** les instructions de commande pour l'appareil (1) à commander requérant des autorisations au niveau de l'utilisateur sont réceptionnées par le terminal mobile (4) puis retransmises à l'appareil (1) à commander pour la commande de celui-ci et ne sont pas mémorisées dans le terminal mobile (4), si seule une instruction de commande possible peut être générée, le procédé comprenant les étapes suivantes :
- du démarrage (s1) par l'utilisateur (8) d'un logiciel sur le terminal mobile (4) ;
- de la réalisation (s2) d'un enregistrement ou d'une connexion de l'utilisateur (8) au moyen d'une communication entre le terminal mobile (4) et le serveur d'authentification (5), après la réalisation (s3) de la connexion ou de l'enregistrement, un ID de session utilisateur étant envoyé par le serveur d'authentification (5) au terminal mobile (4) ;
- de la sélection (s4.1) par l'utilisateur (8) d'un appareil (1) à commander par l'intermédiaire du terminal mobile (4), dans le cadre d'une interaction BLE entre le terminal mobile (4) et un module BLE (3) de l'appareil (1) à commander, un signal de diffusion contenant l'ID matériel de l'appareil (1) à commander étant envoyé (s4.2) par le module BLE (3) au terminal mobile (4) ;
- de l'établissement (s5) d'une communication entre le terminal mobile (4) et le serveur de gestion d'appareil (6), le statut de l'appareil (1) à commander, lequel est identifiable au moyen de l'ID matériel étant interrogé et de l'envoi (s6) d'un signal, qui indique l'aptitude à être commandé de l'appareil (1) à commander par l'intermédiaire du terminal mobile (4), du serveur de gestion d'appareil (6) au terminal mobile (4) ;
- de l'établissement (s7) d'une liaison de données BLE entre le terminal mobile (4) et l'appareil (1) à commander, par l'intermédiaire du module BLE (3) et d'un microcontrôleur (2) de l'appareil (1) à commander, dans une étape suivante (s8), le microcontrôleur (2) signant un paquet de données (DataString) avec une clé publique du serveur de gestion d'appareil (6) et l'envoyant (s9) au terminal mobile (4) ;
- de l'envoi (s10) du paquet de données (DataString) signé, en commun avec l'ID de session utilisateur et l'ID matériel de l'appareil (1) à commander au serveur de gestion d'appareils (6), l'instruction de commande étant demandée ;
- de la vérification (s11, s12) de l'ID de session utilisateur par le serveur de gestion d'appareil (6), à l'aide d'une interaction avec le serveur d'authentification (5) et si l'ID de session utilisateur est valable, de la demande (s13) d'un paquet de données en réponse (DataStringResponse) par un module de cryptage (7) ;
- de la vérification (s14) par le module de cryptage (7) du paquet de données (DataString) signé par le microcontrôleur (2) à l'aide d'une clé privée du serveur de gestion d'appareil (6) et de la génération (s15) d'un paquet de données en réponse (DataStringResponse) contenant l'instruction de commande, lequel en commun avec le paquet de données (DataString) réceptionné est signé (s16) par le module de cryptage (7) avec une clé publique du microcontrôleur (2) ;
- de la retransmission (s17) du paquet de données en réponse (DataStringResponse) signé, en commun avec le paquet de données (DataString) réceptionné signé au serveur de gestion d'appareil (6), par la suite (s18), par l'intermédiaire d'une communication entre le terminal mobile (4) et le serveur de gestion d'appareil (6), le terminal mobile (4) et la liaison de données BLE entre le terminal mobile (4) et le microcontrôleur (2), le paquet de données en réponse (DataStringResponse) signé, en commun avec le paquet de données (DataString) réceptionné signé étant transféré au microcontrôleur (2) sans mémorisation dans le terminal mobile (4) ;
- de la vérification (s19, s20) du paquet de données en réponse (DataStringResponse) réceptionné signé et du paquet de données (DataString) par le microcontrôleur (2) à l'aide d'une clé privée et après vérification terminée de l'envoi (s21) de l'instruction de commande pour exécution à l'appareil à commander ; et
- de l'exécution de l'instruction de commande et de l'envoi (s22) au serveur de gestion d'appareil (6) d'une information de statut concernant la liaison de données BLE entre le terminal mobile (4) et l'appareil (1) à commander par l'intermédiaire du module BLE (3), du terminal mobile (4) et d'une communication entre le terminal mobile (4) et le serveur de gestion d'appareil (6)
et si plusieurs instructions de commande peuvent être générées, le procédé comprenant les étapes suivantes :
- du démarrage (s1) par l'utilisateur (8) d'un logiciel sur le terminal mobile (4) ;
- de la réalisation (s2) d'un enregistrement ou d'une connexion de l'utilisateur (8) au moyen d'une communication entre le terminal mobile (4) et le serveur d'authentification (5), après la réalisation (s3) de la connexion ou de l'enregistrement, un ID de session utilisateur étant envoyé par le serveur d'authentification (5) au terminal mobile (4) ;
- de la sélection (s4.1) par l'utilisateur (8) d'un appareil (1) à commander par l'intermédiaire du terminal mobile (4), dans le cadre d'une interaction BLE entre le terminal mobile (4) et un module BLE (3) de l'appareil (1) à commander, un signal de diffusion contenant l'ID matériel de l'appareil (1) à commander étant envoyé (s4.2) par le module BLE (3) au terminal mobile (4) ;
- de la sélection (s4.1) par l'utilisateur (8) d'un appareil (1) à commander par l'intermédiaire du terminal mobile (4), dans le cadre d'une interaction BLE entre le terminal mobile (4) et un module BLE (3) de l'appareil (1) à commander, un signal de diffusion contenant l'ID matériel de l'appareil (1) à commander étant envoyé (s4.2) par le module BLE (3) au terminal mobile (4) ;
- de l'établissement (s5) d'une communication entre le terminal mobile (4) et le serveur de gestion d'appareil (6), le statut de l'appareil (1) à commander, lequel est identifiable au moyen de l'ID matériel étant interrogé et de l'envoi (s6) d'un signal, qui indique l'aptitude à être commandé de l'appareil (1) par l'intermédiaire du terminal mobile (4), et qui affiche en supplément les instructions de commande possibles (Command List), du serveur de gestion d'appareil (6) au terminal mobile (4) ;
- de la sélection (s4.3) par l'utilisateur (8) de l'instruction de commande à générer souhaitée, parmi la pluralité d'instructions de commande possibles, par l'intermédiaire du terminal mobile (4), ladite information étant envoyée (s5') du terminal mobile (4) au serveur de gestion d'appareil (6), qui dans une prochaine étape, confirme (s6') la sélection ;
- de la mémorisation (s7') de l'instruction de commande sélectionnée dans le serveur de gestion d'appareil (6) et de l'affectation de l'instruction de commande sélectionnée à l'ID matériel de l'appareil (1) ;
- de l'établissement (s7) d'une liaison de données BLE entre le terminal mobile (4) et l'appareil (1) à commander par l'intermédiaire du module BLE (3) et d'un microcontrôleur de l'appareil (1) à commander, dans une prochaine étape (s8), le microcontrôleur (2) signant un paquet de données (DataString) avec une clé publique du serveur de gestion d'appareil (6) et l'envoyant (s9) au terminal mobile (4) ;
- de l'envoi (s10) du paquet de données (DataString) signé, en commun avec l'ID de session utilisateur et l'ID matériel de l'appareil (1) à commander au serveur de gestion d'appareil (6), l'instruction de commande étant demandée ;
- de la vérification (s11, s12) de l'ID d'appareil (6) au moyen d'une interaction avec le serveur d'authentification (S) et si l'ID de session utilisateur est valable, de la demande (s13) d'un paquet de données en réponse (DataStringResponse) de la part du module de cryptage (7), lequel paquet de données en réponse (DataStringResponse) contient l'instruction de commande souhaitée sélectionnée ou correspond à celle-ci,
- de la vérification (s14) par le module de cryptage (7) du paquet de données (DataString) signé par le microcontrôleur à l'aide d'une clé privée du serveur de gestion d'appareil (6) et de la génération (s15) d'un paquet de données en réponse (DataStringResponse), contenant l'instruction de commande, lequel en commun avec le paquet de données (DataString) contenu est signé (s16) par le module de cryptage (7) avec une clé publique du microcontrôleur (2),
- de la retransmission (s17) du paquet de données en réponse (DataStringResponse) signé, en commun avec le paquet de données (DataString) contenu signé au serveur de gestion d'appareil (6), par la suite (s18), par l'intermédiaire d'une communication entre le terminal mobile (4) et le serveur de gestion d'appareil (6), le terminal mobile (4) et la liaison de données BLE entre le terminal mobile (4) et le microcontrôleur (2), le paquet de données en réponse (DataStringResponse) signé, en commun avec le paquet de données (DataString) contenu signé, étant mené vers le microcontrôleur (2), sans mémorisation dans le terminal mobile (4) ;
- de la vérification (s19, s20) par le microcontrôleur (2), du paquet de données en réponse (DataStringResponse) signé réceptionné et du paquet de données (DataString) renvoyé à l'aide d'une clé privée et après vérification terminée, de l'envoi (s21) de l'instruction de commande pour exécution à l'appareil (1) à commander ; et
- de l'exécution de l'instruction de commande et de l'envoi (s22) au serveur de gestion d'appareil (6) d'une information de statut via la liaison de données BLE entre le terminal mobile (4) et l'appareil (1) à commander par l'intermédiaire du module BLE (3), du terminal mobile (4) et d'une communication entre le terminal mobile (4) et le serveur de gestion d'appareil (6).

2. Procédé, destiné à commander un appareil (1) requérant des autorisations au niveau de l'utilisateur, par l'intermédiaire d'un terminal mobile (4) à l'aide d'une liaison de données locale entre le terminal mobile (4) et l'appareil (1) à commander selon la revendication 1, **caractérisé en ce que** la communication entre le terminal mobile (4) et le serveur de gestion d'appareil (6) est une communication basée Internet.

3. Procédé, destiné à commander un appareil (1) requérant des autorisations au niveau de l'utilisateur, par l'intermédiaire d'un terminal mobile (4) à l'aide d'une liaison de données locale entre le terminal mobile (4) et l'appareil (1) à commander selon la revendication 1 ou 2, **caractérisé en ce que** l'appareil (1) à commander est un dispositif de fermeture d'une porte, d'une remise à bicyclette, d'un compartiment sécurisé, d'une armoire, d'un verrou de ski ou d'un vestiaire ou d'un dispositif de contrôle d'accès de personnes ou d'un distributeur destiné à délivrer de produits prédéfinis.

4. Procédé, destiné à commander un appareil (1) requérant des autorisations au niveau de l'utilisateur, par l'intermédiaire d'un terminal mobile (4) à l'aide d'une liaison de données locale entre le terminal mobile (4) et l'appareil (1) à commander selon la revendication 1, 2 ou 3, **caractérisé en ce qu'**en remplacement d'une liaison de données locale établie par l'intermédiaire d'un standard Bluetooth-Low-Energy (BLE) entre le terminal mobile (4) et l'appareil (1) à commander, un autre standard de communication de données sans fil ou filaire est utilisé, si aucun signal de transmission n'est disponible, l'ID matériel de l'appareil (1) à commander étant activement interrogé par le terminal mobile (4).
